# EUROPEAN PATENT APPLICATION

(11) **EP 4 755 165 A1**
(43) Date of publication of application: **10.06.2026**
(21) Application number: 25217746.4
(22) Date of filing: 21.11.2025
(51) Int. Cl.: A01C 23/00

(54) **AGRICULTURAL IMPLEMENT FOR DISTRIBUTING PUMPABLE MEDIUM, AND VEHICLE**

(30) Priority: 03.12.2024 DE 102024135832
(71) Applicant: Bomech B.V., 7665 SH Albergen (NL)
(72) Inventor: SCHURINK, Gerard Johannes, 7665 SH Albergen (NL); HOEK, Johannes Bernardus Maria, 7665 SH Albergen (NL); MAATHUIS, Jolien Maria Anna, 7665 SH Albergen (NL)
(74) Representative: Patentwerk B.V.

(57) **Abstract**

The disclosure relates to an agricultural implement (20) for distributing a pumpable medium. The implement comprises a support frame (2), at least one spreader arm (3), provided with pumpable medium outlets (4), a pumpable medium line, extending from the support frame along the spreader arm to the pumpable medium outlets, and at least one displacement structure (21) for moving at least one medium outlet between a folded and unfolded position.

## Description

The invention relates to an agricultural implement for distributing a pumpable medium over agricultural land. The invention also relates to the use or intended use of the agricultural implement for distributing a pumpable medium according to the invention. Furthermore, the invention relates to an agricultural implement, coupled to a vehicle, for distributing a pumpable medium according to the invention.

Such agricultural implements are well-known, for example, for distributing liquid fertilizer over (agricultural) land, as a sprayer for atomizing liquid crop protection products, or as a seeding device for sowing land. **In** order to ensure that work is carried out as effectively as possible, such agricultural implements are provided with one or more operational arms that can be oriented such that, in their working position, they extend perpendicular to the direction of travel of a carrying vehicle, enabling them to cultivate the widest possible strip and/or a specifically adjustable working strip of (agricultural) land in a single pass. To enable the agricultural implement to be moved on (public) roads, the operational arm(s) is(are) configured to be folded to a maximum width that approximately matches the width of the carrying vehicle. In vehicles according to the state of the art, the arms often extend on both sides of the carrying vehicle. The vehicle is usually provided with a tank, with the arms extending on either side of the tank, but it is also possible for the pumpable medium to be supplied from a separate medium buffer, located a short distance from the carrying vehicle, in the form of an external mobile or stationary supply system.

Many of these spreader arms are provided with a mechanism to fold or retract the spreader arm to reduce its length for transport. This allows the arms to be relatively short in the transport position and not overextend themselves compared to, for example, the tank or vehicle to which they are connected. By folding and/or retracting the spreader arm in a working position, wherein the spreader arm typically extends perpendicular to the direction of travel, a wider working width can be achieved. This has the advantage of allowing a wider strip of land to be cultivated simultaneously.

Often, it is possible for the medium outlets to be rotated relative to the spreader arm. This is advantageous because it prevents, after the media supply has stopped, that residual media leaks into the lines during transport on the road or elsewhere. For this purpose, the medium outlets can often be folded in and out.

However, these folding and unfolding structures are often relatively complex and therefore require a lot of maintenance. Furthermore, it's often not possible to define the folded and unfolded positions in a simple manner, which is desirable. An additional challenge is that it's desirable for the medium outlets, which are often formed by drag hoses, to be freely movable over the agricultural land in the unfolded position. This is often complex when pneumatic or electric rotation systems are used. Ground clearance is also very important. If the medium outlets, it may happen that, according to the state of the art, part of the frame becomes damaged, which is undesirable.

To this end, a first object of the present invention is to provide a simpler construction for folding and unfolding medium outlets in an agricultural implement.

A second object is to provide an agricultural implement that is easier to maintain, especially with regard to the medium outlets.

For this purpose, the present invention provides an agricultural implement for distributing, preferably selectively distributing, a pumpable medium over agricultural land, comprising:
- a support frame, configured to be connected to a vehicle;
- at least one spreader arm, connected to the support frame, preferably pivotally, which spreader arm is movable between a working position, extending laterally from the support frame, mainly transversely to the direction of travel of the vehicle, and a transport position, extending mainly in the direction of travel of the vehicle,
- multiple medium outlets, one or more medium outlets being rotatably connected to the at least one spreader arm between:
   o a folded position, with the medium outlets facing away from the agricultural land, and
   o an unfolded position, with the medium outlets at least partially directed towards the agricultural land,
- a pumpable medium line, extending from the support frame along the spreader arm to the pumpable medium outlets;
- at least one displacement structure for moving at least one medium outlet between the folded position and the unfolded position, comprising:
   o preferably at least one coupling, by means of which the medium outlet is rotatably connected to the spreader arm,
   o at least one flexible transmission, and
   o at least one actuator for imparting a movement on the flexible transmission,
wherein the flexible transmission is connected at least, directly or indirectly, to, on the one hand, the at least one medium outlet and/or the coupling, and, on the other hand, to the actuator and/or the spreader arm. Although the present invention refers to a single spreader arm, it is also conceivable that a second spreader arm is provided. Preferably, the second spreader arm is arranged on an opposite side of the support frame and provided with medium outlets and a displacement structure according to the invention.

The advantage of the displacement structure is that a simple folding and unfolding system can be achieved that is less complex. This contributes to easier maintenance of the agricultural implements. The flexible transmission allows the movement, initiated by the actuator, to be easily transferred to the medium outlets, allowing them to fold and unfold. Furthermore, the advantage of a flexible transmission is that its flexible nature allows it to be guided from the spreader arm to the medium outlets in a preferred manner, allowing it to be installed in locations where it need not interfere with other components.

The flexible transmission is configured to transfer the movement, imparted by the actuator, to a movement of the medium outlet between the folded and unfolded positions. The actuator thereby causes the flexible transmission to start to move. Because the flexible transmission is attached, directly or indirectly, to the medium outlets, the movement imparted on the transmission also sets the transmission in motion. The flexible transmission can at least be subjected to tensile loads. The flexible transmission is preferably not or only slightly elastic, such that there is no or minimal delay between imparting a movement and effecting the folding or unfolding movement of the medium outlets. This also has a beneficial effect on the ground clearance. Since the medium outlets are freely movable via the flexible transmission, unlike a rigid frame, it is not immediately a problem if one of the medium outlets touches the ground.

The coupling provides a simple connection between the medium outlets and the spreader arm. This coupling can conceivably be configured in several ways. For example, the coupling can be a direct, rotatable coupling of the medium outlets to the spreader arm, but it can also be formed by a frame section that connects the medium outlets, directly or indirectly, to the spreader arm. Throughout this document, the coupling may also be referred to as a coupling unit and/or coupling mechanism.

Preferably, one or more medium outlets are arranged, preferably parallel, on a support frame, wherein the aforementioned coupling rotatably connects the support frame to the spreader arm. However, it is also conceivable to arrange only one medium outlet on each support frame. This allows one or more medium outlets to be selectively folded and unfolded using a displacement structure, which can be advantageous. For example, this allows for more precise adjustment of a working width. However, it is also advantageous if multiple medium outlets are arranged on a single support frame, with the displacement structure capable of folding and unfolding the entire support frame with medium outlets.

Preferably, the displacement structure, in particular the coupling, comprises at least one link, which link is rotatably connected about a first axis of rotation to the medium outlet(s), preferably a support frame (if applied), and wherein the link is rotatably connected about a second axis of rotation to the spreader arm. Where it is stated that the link is rotatably connected to the spreader arm or the support frame, this should be understood as either directly to the support frame/spreader arm or to a component that is fixedly (and preferably not rotatably) connected to the support frame/spreader arm. In this way, the coupling, formed by the link, can be achieved with two axes of rotation. Due to the presence of these two axes of rotation, it can also be said that the coupling constitutes a mechanism. And therefore, that the medium outlets are connected to the spreader arm via a mechanism. Preferably, the first axis of rotation and the second axis of rotation are substantially parallel to each other. More preferably, the first and second rotational axes are also substantially parallel to a longitudinal direction of the spreader arm.

**It** is conceivable that, at least in the folded position, the at least one link is substantially horizontally. Preferably, the at least one link is, at least in the folded position, substantially parallel to the agricultural land. "Substantially parallel" is understood as a deviation of approximately 5 to 10 degrees from the horizontal. Preferably, the link extends perpendicular to the spreader arm, or at least relative to a longitudinal direction thereof.

Preferably, the link comprises at least one first blocking element, which first blocking element limits a maximum rotation of the at least one medium outlet, preferably a part of the support frame, relative to the link in a first direction of rotation. Preferably, this first direction of rotation corresponds to the retraction direction of the medium outlets and/or the support frame (if applied). **It is** conceivable that the link comprises at least one second blocking element, which second blocking element limits a maximum rotation of the at least one medium outlet, preferably a part of the support frame, relative to the link in a second direction of rotation. Preferably, this second direction of rotation corresponds to the extension direction of the medium outlets and/or the support frame (if applied). The first direction of rotation and the second direction of rotation are therefore directions of rotation facing away from each other, in particular directions of rotation of the medium outlets (or the support frame) relative to the at least one link. The first direction of rotation and the second direction of rotation are both located about the first axis of rotation (between the medium outlet or support frame and the link). It is conceivable that a part of the medium outlet or a part of the support frame is provided with an engagement element that cooperates with the first or second blocking element. The engagement element can be formed by a hook or part that engages with the first or second blocking element in order to prevent a further rotation of the components. This can prevent over-rotation of the medium outlets. It is also conceivable that the first and second blocking elements are formed by a single blocking element, with the aforementioned engagement element being configured to engage with the blocking element in two different positions (angular positions).

Preferably, the first blocking element and the second blocking element allow for a full angular rotation between a vertically upward, oriented position of the medium outlets, facing away from the agricultural land, and a substantially vertically downward, oriented position of the medium outlets, facing towards the agricultural land. Therefore, it is preferable that the link and blocking elements allow for a full 180-degree rotation of the medium outlets (and/or support frame) relative to the spreader arm. It is conceivable that the first and second blocking elements, together with the engagement element, allow for a 90-degree rotation, with the remaining 90 degrees being achieved by another limitation, for example, between the link and the spreader arm. However, a different geometric distribution may also result in the prescribed movement, depending on the design.

Preferably, the link comprises at least one third blocking element, which third blocking element limits a maximum rotation of the at least one link relative to the spreader arm in a first direction of rotation. Preferably, to this end, the spreader arm comprises an engagement element, adapted to cooperate with the blocking element to limit the rotation of the link relative to the spreader arm. Preferably, this third blocking element, either alone or in conjunction with the engagement element, limits the rotation of the link relative to the spreader arm in the first direction of rotation. Preferably, the third blocking element is adapted to limit a rotation in only one direction, while leaving the other direction of rotation substantially free.

It is conceivable that at least one, preferably all, blocking elements are formed by a bushing, which bushing extends between two plates of the link. This bushing can be made of a plastic, such that the engagement element and the at least one bushing do not make unnecessary noise when touching or engaging each other. Preferably, the bushings, which form the blocking elements of the link, are located between the first axis of rotation and the second axis of rotation.

Preferably, the displacement structure comprises at least one stopper or stop structure, wherein the at least one medium outlet, preferably a part of the support frame, abuts against the at least one stopper in the folded position and/or unfolded position.

The at least one flexible transmission is at least partially formed by a belt and/or chain and/or wire and/or elastic. In any case, the flexible transmission must be able to withstand tensile loads, such that the imparted movement can be efficiently transferred to the medium outlet(s).

The at least one flexible transmission is connected, on one side, directly or indirectly, to the spreader arm, and the other side, directly or indirectly, to the medium outlet, preferably a support frame. Preferably, one or both ends of the flexible transmission are provided with a loop or eye, which loop or eye is configured for engagement, in particular fastening, with a pin, such as a locking pin. This allows the flexible transmission to be securely connected to the spreader arm and medium outlet, preferably the support frame.

The agricultural implement can optionally be provided with multiple displacement structures, preferably arranged on the spreader arm, preferably spaced apart in the longitudinal direction of the spreader arm. It is also conceivable to provide only a single displacement structure. By installing multiple displacement structures, it is possible to better distribute the loads across the flexible transmissions. Furthermore, by making the displacement structures independently operable, it is conceivable to achieve rotation about a rotational axis, parallel to the vehicle's direction of travel. This allows the medium outlets to be better aligned with the agricultural land.

Preferably, the at least one actuator is a linear actuator for imparting a linear movement on the flexible transmission. Alternatively, the at least one actuator can also be a rotary actuator for rolling up and/or unrolling the flexible transmission onto a roller to thus impart the movement. However, the linear actuator is preferred. A linear actuator can easily be attached to the spreader arm to achieve the desired movement of the medium outlets. Preferably, the linear movement extends substantially perpendicular to a longitudinal direction of the spreader arm, in particular in a direction facing towards and/or facing away from the agricultural land. However, if an additional transmission is provided, in the form of a guide, it is also possible to position the at least one linear actuator parallel to the longitudinal direction of the spreader arm. To this end, the movement, imparted to the transmission in the longitudinal direction of the spreader arm, must be converted into a rotary movement. This can be accomplished by deflecting the transmission from its longitudinal direction toward its connection on the medium outlet or support frame. Preferably, the actuator comprises a static part and a dynamic part, with the static part being connected to the spreader arm, and the dynamic part being configured to impart movement to the flexible transmission and/or the dynamic part being movable relative to the spreader arm. The actuator can be formed, for example, by a hydraulic cylinder. Optionally, one end of the dynamic part of the actuator comprises a guide wheel for guiding a part of the flexible transmission along and/or via the guide wheel. Preferably, the aforementioned guide wheel is arranged on the end of the dynamic part, facing away from the static part. The guide wheel can be rotatable, but alternatively, it can also be configured as a fixed wheel in the form of a guide element. For this purpose, even installing just half a wheel might suffice. Optionally, the transmission runs at least partly through or along the end or butt side of the guide wheel.

Optionally, the agricultural implement comprises at least one guide structure for guiding the flexible transmission between, on the one hand, the at least one medium outlet and/or the coupling and, on the other hand, the actuator and/or the spreader arm. Preferably, the guide structure comprises at least one guide wheel for guiding a part of the flexible transmission along and/or via the guide wheel, in particular such that the flexible transmission disentangles and/or extends freely at least between, on the one hand, the at least one medium outlet and/or the coupling and, on the other hand, the actuator and/or the spreader arm. The guide structure may comprise at least two guide wheels between which the flexible transmission is arranged. Additionally and/or alternatively, the guide structure comprises at least two feed wheels between which the at least one flexible transmission extends from the spreader arm towards the medium outlet and/or the support frame. Preferably, at least one guide wheel and/or the feed wheels are positioned at a distance from the rear of the spreader arm. This helps to prevent the transmission from rubbing against the spreader arm and thus wearing out more quickly. Preferably, at least part of the guide structure, in particular at least one or at least two guide wheels, is arranged on the spreader arm. It is also conceivable that one or more guide wheels are arranged on the support frame. Preferably, one or more guide wheels, as discussed, are arranged in a guide frame connected to the spreader arm. It is conceivable that the at least one actuator is also arranged on or in this frame.

The invention also relates to a vehicle, provided with an agricultural implement according to the invention. Finally, the invention also relates to the use or intended use of an agricultural implement according to the invention. The advantages mentioned above with regard to the agricultural implement apply here in full.

The present invention will be further explained using the non-limiting exemplary embodiments shown in the following figures. These show:
- Figure 1a is a perspective view of a vehicle, provided with an agricultural implement according to the present invention, wherein the medium outlets are in a folded position;
- Figure 1b is a perspective view of a vehicle provided with an agricultural implement according to the present invention, wherein a number of the medium outlets are in an unfolded position;
- Figure 2a shows a perspective view of a displacement structure of an agricultural implement according to the present invention, wherein the medium outlets are in a folded position,
- Figure 2b shows a perspective view of a displacement structure of an agricultural implement according to the present invention, wherein the medium outlets are between a folded and an unfolded position,
- Figure 2c shows a perspective view of a displacement structure of an agricultural implement according to the present invention, wherein the medium outlets are in an unfolded position, and
- Figure 3 shows a perspective view of an agricultural implement according to the present invention, wherein the medium outlets are between a folded and an unfolded position.

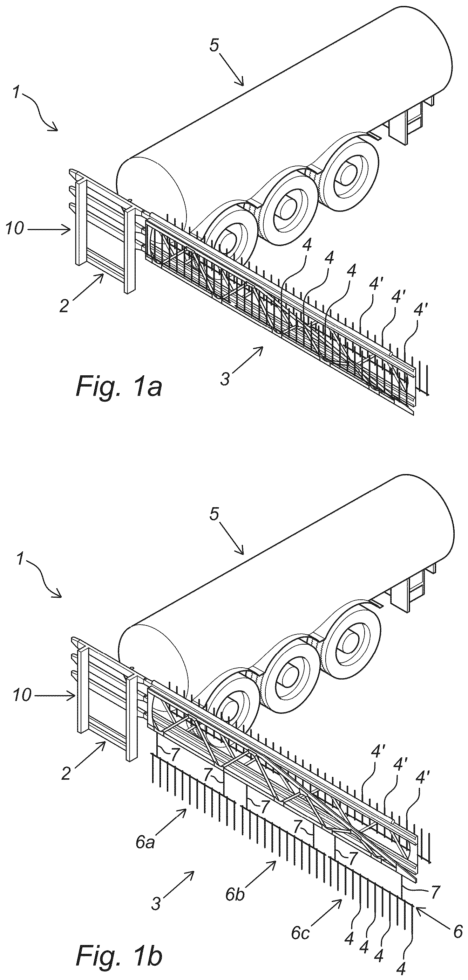

Figures 1a and 1b show a vehicle 1, such as a tractor or slurry tanker, provided with an agricultural implement 10 according to the present invention. The vehicle 1 comprises a tank 5 for holding a pumpable medium. In the exemplary embodiment shown, the agricultural implement 10 is attached to the rear of the vehicle 1. The agricultural implement 10, for distributing a pumpable medium over agricultural land, is provided with a support frame 2 that is coupled to, in this exemplary embodiment, the rear of the vehicle 1. A spreader arm 3 is attached to the support frame 2, in particular in a pivotable manner. It is conceivable that the support frame 2 comprises more than one spreader arm 3. The spreader arm 3 is specifically configured to rotate between a transport position, in which the spreader arm 3 preferably extends in the direction of travel of the vehicle 1, and an operating position, in which the spreader arms 2 preferably extend at least partially in a direction perpendicular to the direction of travel of the vehicle 1. In the exemplary embodiments shown in Figures 1a, 1b, the spreader arm 3 is in the operating position. The spreader arm 3 is provided with a plurality of medium outlets 4, 4' for distributing a pumpable medium, such as manure, over agricultural land. In the exemplary embodiment shown, both sides of the spreader arm 3 are provided with medium outlets 4, 4'. However, it is also possible for one side of the spreader arm 3 to be provided with one or more medium outlets 4, 4'. The agricultural implement 10 further comprises a medium conduit extending from the support frame 2 along the spreader arm 3 to the medium outlets 4, 4', which are not shown in the examples shown. One or more medium outlets 4, 4' are rotatably connected to the spreader arm 3, between a folded position, as shown in Figure 1a, and an unfolded position, as shown in Figure 1b.

In the folded position, see Figure 1a, the medium outlets 4, 4' face away from the agricultural land. In the example shown, the medium outlets 4, 4' face upward. In the folded position, the medium outlets 4, 4' are positioned such that the pumpable fluid cannot and/or will not leak from the medium outlets 4, 4'.

In the unfolded position, see Figure 1b, one or more medium outlets 4, 4' are at least partially directed toward the agricultural land. In the exemplary embodiment shown, the medium outlets 4 on one side of the spreader arm 3 are in the unfolded position, and the medium outlets 4' on either side thereof are in a folded position. The medium outlets 4 on a first side of the spreader arm 3, and optionally the medium outlets 4' on either side of the spreader arm 3, are preferably rotatably connected to the spreader arm 3 via a coupling 7. In the exemplary embodiment shown, the medium outlets 4 are arranged on a support frame 6, in particular arranged parallel. In the exemplary embodiment shown, three support frames 6a-6c are rotatably connected to the spreader arm 3. The three support frames 6a-6c shown are rotatably connected to the spreader arm 3 via one or more couplings 7. It is also conceivable that one or more medium outlets and/or support frames 6a-6c are rotatably connected to the spreader arm 3 independently and/or individually, in particular via a coupling 7.

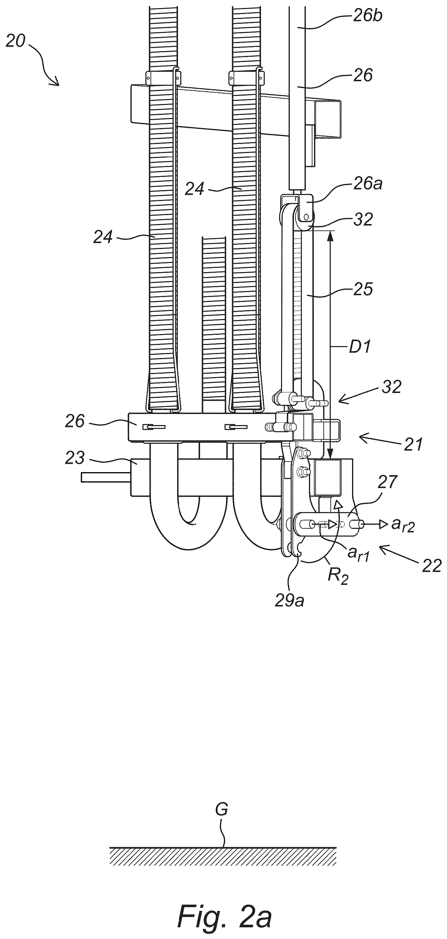

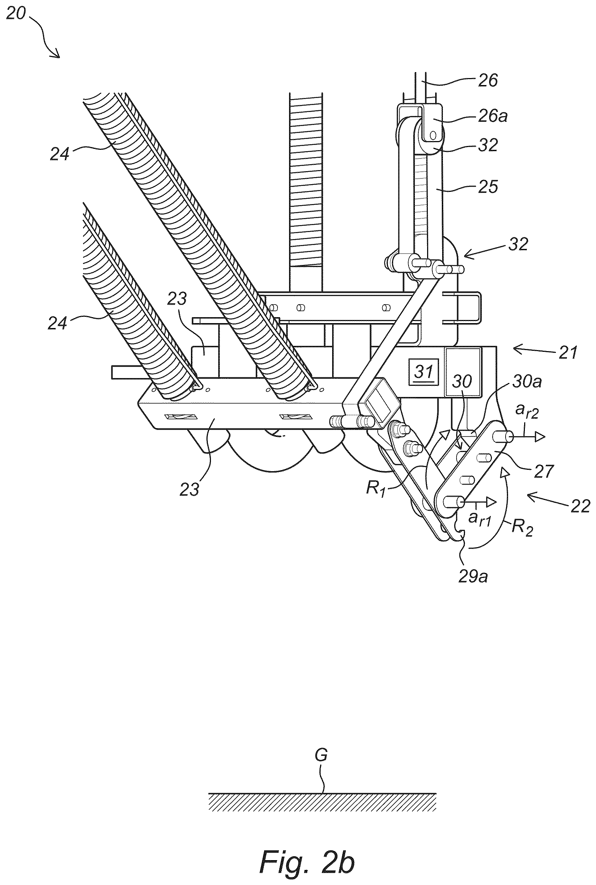

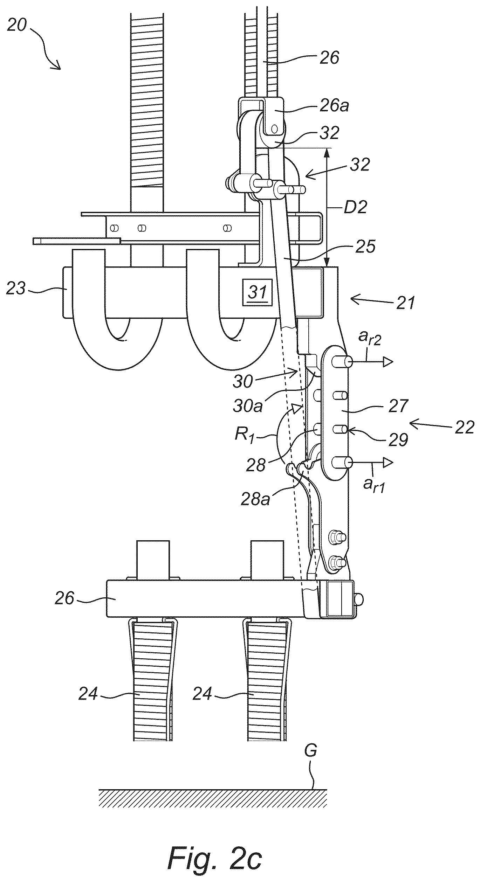

Figures 2a-2c show a perspective view of a displacement structure 21 of an agricultural implement 20 according to the present invention. Figure 2a shows medium outlets 24, specifically arranged on a support frame 26, in a folded position, wherein the medium outlets 24 face away from the agricultural land G. Figure 2c shows the medium outlets 24, specifically arranged on the support frame 26, in a folded position, wherein the medium outlets face the agricultural land G. Figure 2b shows the medium outlets 24, specifically arranged on the support frame 26, in a transition position, wherein the medium outlets 24 are between the folded and unfolded positions.

The displacement structure 21 is adapted to move at least one, in this exemplary embodiment two, medium outlet(s) 24 between the folded position (Figure 2a) and the unfolded position (Figure 2c). The displacement structure 21 comprises a coupling 22 which rotatably connects the spreader arm 23 and at least one, in the exemplary embodiment shown at least two, medium outlet(s) 24. In the exemplary embodiment shown, the coupling 22 rotatably connects the support frame 26 to the spreader arm 23. The displacement structure 21 further comprises a flexible transmission 25 and an actuator 26 for imparting a movement on the flexible transmission 25. The flexible transmission 25 in the exemplary embodiment shown is connected, on the one hand, to the spreader arm 23 and, on the other hand, to the medium outlets 24, in particular a support frame 26 of the medium outlets 24. In the exemplary embodiments shown, the flexible transmission 25 is guided via a guide structure 33 between, on the one hand, the at least one medium outlet 24 and/or the coupling 22 and, on the other hand, the actuator 26 and/or the spreader arm 23.

In the exemplary embodiments shown, coupling 22 comprises a link that is connected, directly or indirectly, on the one hand, rotatably about a first axis of rotation aᵣ₁ to the medium outlet 24 and/or the support frame 26, and, on the other hand, rotatably about a second axis of rotation aᵣ₂ to the spreader arm 23. In the exemplary embodiment shown, the first axis of rotation aᵣ₁ and the second axis of rotation aᵣ₂ are parallel. In the folded or folded-up position (Figure 2a), the link 27 is substantially horizontal. In particular, in the folded position, the link 27 is substantially parallel to the agricultural land. The link 27 shown further comprises, see Figure 2c, a first blocking element 28 that limits a maximum rotation of the shown medium outlets 24 and/or a part of the support frame 26 relative to link 27 in a first direction of rotation R₁. In the exemplary embodiments shown, a part of the medium outlet 24, specifically a part of the support frame 26, is provided with an engagement element 28a that cooperates with the first blocking element 28. In the exemplary embodiments shown, the engagement element 28a is formed by a hook that engages with the first blocking element 28 in order to prevent further rotation. In Figures 2a and 2b, the limitation in the first direction of rotation R₁ through the use of the first blocking element 28, is shown, wherein the medium outlets 24, and specifically the support frame 26, have reached or are about to reach a maximum rotation in the direction of the spreader arm 23. The link 27 shown further comprises, see Figure 2c, a second blocking element 29 that limits a maximum rotation of the at least one medium outlet 24, preferably a part of the support frame 26, relative to the link 27 in a second direction of rotation R_{2.} In the exemplary embodiments shown, a part of the medium outlet 24, in particular a part of the support frame 26, is provided with an engagement element 29a that cooperates with the second blocking element 29. In the exemplary embodiments shown, the engagement element 29a is formed by a hook that engages with the first blocking element 29 to prevent further rotation. In Figure 2c, the limitation in the second direction of rotation R₂ is shown, wherein the medium outlets 24, and in particular the support frame 26, have achieved a maximum rotation in a direction facing away from the spreader arm 23. In the exemplary embodiment shown, the link 27, see Figures 2b and 2c, comprises a third blocking element 30 that limits a maximum rotation of the link 27 relative to the spreader arm in a first direction of rotation R_{1.} In the exemplary embodiment shown (see Figures 2b and 2c), the third blocking element 30 comprises an engagement element 30a for cooperation with the third blocking element 30 to limit the rotation of the link 27 relative to the spreader arm 23. In Figure 2a, the limitation in the first direction of rotation R₁ through the use of the third blocking element 30 is shown, wherein the medium outlets 24, and in particular the support frame 26, have achieved a maximum rotation in the direction of the spreader arm 23. The first direction of rotation R₁ and the second direction of rotation R₂ are directions of rotation facing away from each other in the exemplary embodiment. It is conceivable that a first direction of rotation R₁ and/or the second direction of rotation R₂ are located at least partly about the first axis of rotation aᵣ₁ and/or the second axis of rotation aᵣ₂.

The displacement structure 21 of the exemplary embodiments shown comprises a stopper 31. The stopper 31 in the exemplary embodiment shown, see Figures 2b and 2c, is arranged on the spreader arm 3. However, it is conceivable that the stopper 31 or a further stopper is arranged on the support frame 26 and/or on a medium outlet 24. In the folded position, see Figure 2a, the medium outlet 24, in particular a part of the support frame 26, is in contact with the stopper 31.

In the exemplary embodiments shown in Figures 2a-2c, the actuator 26 is a linear actuator that imparts linear movement to flexible transmission 25. Actuator 26 of the exemplary embodiments shown is configured to move in a direction perpendicular to the length of spreader arm 23, specifically in a direction facing towards and/or facing away from agricultural land G. Preferably, linear actuator 26 comprises a dynamic part 26a and a static part 26b, which are preferably connected directly or indirectly to spreader arm 23. In the folded or folded-up position of the medium outlets 24, Fig. 2a, the linear actuator 26, in particular the dynamic part 26a of the actuator 26, is located at a first distance D1 from the spreader arm 23. In the unfolded state of the medium outlets 24, Figure 2c, the linear actuator 26, in particular the dynamic part 26a of the actuator 26, is located at a second distance from the spreader arm 23. Preferably, the first distance D1 is greater than the second distance D2. In the exemplary embodiments shown, the end of the dynamic part 26a of the actuator 26 comprises a guide wheel 32. The flexible transmission 25 is connected to the actuator 26 via this guide wheel 32.

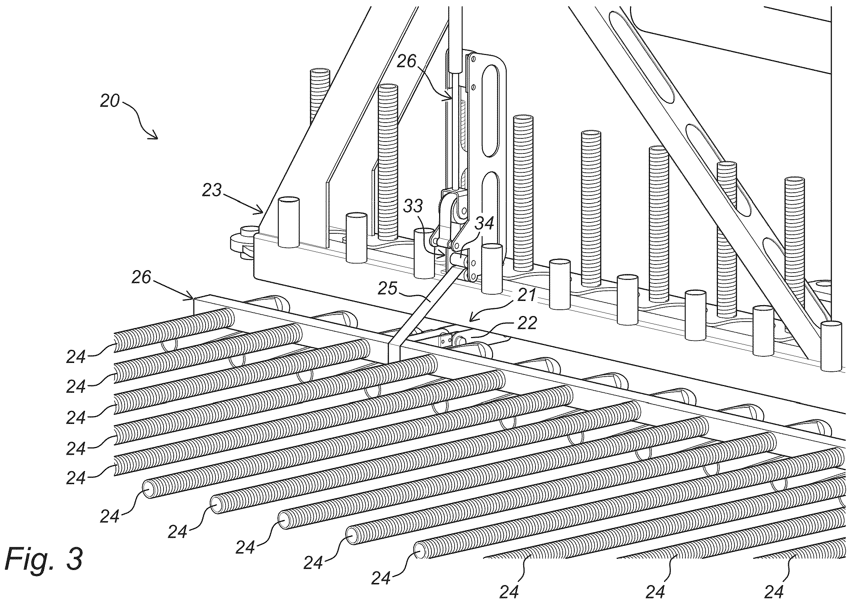

Figure 3 shows a perspective view of a part of an agricultural implement 20 according to the invention presented. Elements and/or features, shown in Figure 3, that correspond to elements and/or features with the same and/or a similar function and/or application,, as shown in Figures 2a-2c are indicated in Figure 3 by the same reference numerals. Figure 3 shows a plurality of medium outlets 24, arranged on a support frame 26. The support frame 26 is rotatably connected to the spreader arm 23 via a coupling 22. In the exemplary embodiment shown, the spreader arm 23 comprises a single displacement structure 21, with at least thirteen medium outlets 24, arranged in the support frame 26, which are rotatably connected to the spreader arm 23 via a single coupling 22. In Figure 3, the plurality of medium outlets 24 are in a position between the folded position and the unfolded position. In the exemplary embodiment shown, the flexible transmission 25 is connected, on the one hand, to the spreader arm 23 and, on the other hand, to the medium outlets 24, in particular a support frame 26 of the medium outlets 24. In the exemplary embodiment shown, the flexible transmission 25 is guided via a guide structure 33 between, on the one hand, the at least one medium outlet 24 and/or the coupling 22 and, on the other hand, the actuator 26 and/or the spreader arm 23. The guide structure 33 shown comprises two guide wheels between which the flexible transmission 25 is arranged. In the exemplary embodiment shown, part of the guide structure 33, in particular the guide wheels 34, is arranged on the spreader arm 23.

## Claims

1. Agricultural implement for distributing a pumpable medium over agricultural land, comprising:
- a support frame, configured to be connected to a vehicle;
- at least one spreader arm, connected to the support frame, preferably pivotally, which spreader arm is movable between a working position, extending laterally from the support frame, mainly transversely to the direction of travel of the vehicle, and a transport position, extending mainly in the direction of travel of the vehicle,
- multiple medium outlets, one or more medium outlets being rotatably connected to the at least one spreader arm between:
o a folded position, with the medium outlets facing away from the agricultural land, and
∘ an unfolded position, with the medium outlets at least partially directed towards the agricultural land,
- a pumpable medium line, extending from the support frame along the spreader arm to the pumpable medium outlets ;
- at least one displacement structure for moving at least one medium outlet between the folded position and the unfolded position, comprising:
∘ at least one coupling, by means of which the medium outlet is rotatably connected to the spreader arm,
∘ at least one flexible transmission, and
∘ at least one actuator for imparting a movement on the flexible transmission,
wherein the flexible transmission is connected at least to - on the one hand - the at least one medium outlet and/or the coupling, and - on the other hand - to the actuator and/or the spreader arm.

2. The agricultural implement according to claim 1, wherein one or more medium outlets are arranged, preferably parallel, on a support frame, and wherein the coupling rotatably connects the support frame to the spreader arm.

3. The agricultural implement according to claim 1 or 2, wherein the coupling comprises at least one link, which link, on the one hand, is rotatably connected about a first axis of rotation to the medium outlet, preferably a support frame, and wherein the link, on the other hand, is rotatably connected about a second axis of rotation to the spreader arm, preferably wherein the first axis of rotation and the second axis of rotation are substantially parallel.

4. The agricultural implement according to claim 3, wherein, at least in the folded position, the at least one link is substantially horizontally.

5. The agricultural implement according to any one of claims 3 - **4,** wherein the link comprises at least one first blocking element, which first blocking element limits a maximum rotation of the at least one medium outlet, preferably a part of the support frame, relative to the link in a first direction of rotation.

6. The agricultural implement according to any one of claims 3 - 5, wherein the link comprises at least one second blocking element, which second blocking element limits a maximum rotation of the at least one medium outlet, preferably a part of the support frame, relative to the link in a second direction of rotation.

7. The agricultural implement according to claims 5 and 6, wherein the first direction of rotation and the second direction of rotation are directions of rotations facing away from each other.

8. The agricultural implement according to any one of the preceding claims, wherein the link comprises at least one third blocking element, which third blocking element limits a maximum rotation of the at least one link relative to the spreader arm in a first direction of rotation and/or wherein the displacement structure comprises at least one stopper, wherein the at least one medium outlet, preferably a part of the support frame, abuts against the at least one stopper in the folded position and/or unfolded position.

9. The agricultural implement according to any one of the preceding claims, wherein the at least one flexible transmission is at least partly formed by a belt and/or chain and/or wire and/or elastic and/or wherein the at least one flexible transmission is connected, on one side, to the spreader arm, and wherein the at least one flexible transmission is connected, on the other side, to the medium outlet, preferably a support frame and/or wherein one or more displacement structures are arranged on the spreader arm, spaced apart in the longitudinal direction of the spreader arm.

10. The agricultural implement according to any one of the preceding claims, wherein at least one actuator is a linear actuator for imparting a linear movement on the flexible transmission, preferably wherein the linear movement extends substantially perpendicular to a longitudinal direction of the spreader arm, in particular in a direction facing towards and/or facing away from the agricultural land.

11. The agricultural implement according to any one of the preceding claims, wherein the actuator comprises a static part and a dynamic part, the static part being connected to the spreader arm, and the dynamic part being adapted to impart a movement on the flexible transmission.

12. The agricultural implement according to claim 11, wherein an end of the dynamic part of the actuator comprises a guide wheel for guiding a part of the flexible transmission along and/or via the guide wheel.

13. The agricultural implement according to any one of the preceding claims, further comprising a guide structure for guiding the flexible transmission between, on the one hand, the at least one medium outlet and/or the coupling and, on the other hand, the actuator and/or the spreader arm, preferably wherein the guide structure comprises at least one guide wheel for guiding a part of the flexible transmission along and/or via the guide wheel and/or wherein the guide structure comprises at least two guide wheels between which the flexible transmission is arranged.

14. The agricultural implement according to any one of claims 13, wherein at least part of the guide structure, in particular at least one or at least two guide wheels, is arranged on the spreader arm.

15. Vehicle, provided with an agricultural implement according to any one of the preceding claims.
